Europäisches Patentamt

European Patent Office

Office européen des brevets

(11) Publication number: **0 072 172**
A1

# EUROPEAN PATENT APPLICATION

(21) Application number: **82304073.8**

(22) Date of filing: **02.08.82**

(51) Int. Cl.³: **E 02 F 5/10,** H 02 G 1/10

(30) Priority: **03.08.81 GB 8123677**
**03.08.81 GB 8123678**
**03.08.81 GB 8123679**

(43) Date of publication of application: **16.02.83**
**Bulletin 83/7**

(84) Designated Contracting States: **FR GB IT SE**

(71) Applicant: **BICC Public Limited Company, 21,**
**Bloomsbury Street, London, WC1B 3QN (GB)**

(72) Inventor: **Waterhouse, Norman Howard, 39 York Road,**
**Windsor Berkshire (GB)**

(74) Representative: **Poole, Michael John et al, BICC plc**
**Patents Department 38 Ariel Way Wood Lane, London**
**W12 7DX (GB)**

(54) **Laying cables and the like under water.**

(57) Apparatus for laying two or more cables under water in substantially the same trench as a line laid below the sea bed comprises a submersible trench clearing and cable positioning device having a separate hollow flexible guide for feeding each cable into the device.

0072172

MJD/8123677

## LAYING CABLES AND THE LIKE UNDER WATER

This invention relates to a method of, and apparatus for, laying cables, pipes or other elongate flexible members (hereinafter for convenience referred to as "cables") under water.

In the complete specification of our UK Patent No 1466570 (our earlier patent) we have described and claimed a method of laying a cable below the bed of a body of water comprising forming a trench in the bed and laying in it a line (for example a steel hawser) having a greater strength and/or a lower cost than the cable; and then a separate second operation laying the cable from a cable-laying vessel in substantially the same trench by a submerged device caused to follow the path of the line.

As described in our earlier patent, the submerged device (such as a "plough") may be towed by the cable-laying vessel through a recovered length of the line layed in the first operation or otherwise, or it may have internal traction means.

In the specification of our published UK Patent Application No 2019113A (our earlier patent application), we have described and claimed a method of laying one or more cables under water in substantially the same trench as a line already laid below the bed of the body of water comprising advancing a submerged cable-positioning device along the path of the line in a laying direction by traction means on said device pulling on the line ahead, and feeding the cable from a cable-laying vessel to said device in such a manner that any auxiliary lines extending between the vessel and the device are, relative to the laying direction, above and behind the flexible member.

We have also described and claimed in our earlier patent application apparatus for laying a cable under water in substantially the same trench as a line laid below the sea bed comprising a submersible trench clearing and cable-positioning device having traction means to pull on the line ahead to advance said device along the path of the line.

When using these apparatuses problems sometimes arise in arranging the orientation of two or more cables relative to each other when they are being installed simultaneously in the trench. If the tensions in the cables differ slightly it is possible for them to cross each other under the influence of a cross current and it could be hazardous to attempt to uncross them within the submerged device where space is restricted. In most circumstances it is preferred that the cables should lie side by side in the bottom of the trench, and it may also be desirable to separate them so that heat dissipation is enhanced.

According to the present invention, apparatus for laying two or more cables under water in substantially the same trench as a line laid below the sea bed comprises a submersible trench clearing and cable-positioning device having a separate hollow flexible guide for feeding each cable into the device.

In this arrangement each flexible guide can control the radius of curvature of the cables as they enter the device, and since the cables are received separately it is possible to directed them into the preferred orientation and separation at their exit from the device into the trench.

This invention is applicable to any of the apparatuses described in our earlier patent and our earlier patent application.

Preferably each hollow flexible guide is of limited extent so as to cover a bend of approximately 135° at the appropriate bending radius for the cable fed through it.

Alternatively each hollow flexible guide could extend up to the cable-laying vessel so that each cable is kept under full control throughout its descent to the sea bed. In this case a single flexible guide may be used which has two or more separate channels, one for each cable.

Preferably the device also comprises cutting and lifting means for assisting in the breaking up and/or removal of heavy debris from the trench. The cutting and lifting means preferably comprises a chain-type cutter and mechanical hoist assembly. In this case the device may also comprise high velocity water jets positioned between the cutting means. -

The device preferably also comprises high pressure water jets to cut the outline of the side and base of the trench and low pressure water jets to lift the body of cut material out of the trench.

Preferably the device also includes trench

filling means comprising a suction system for collecting a proportion of material removed from the trench, a grading system to grade the collected material into various sizes, and a discharge system for initially covering the cables in the trench with material of suitable size to provide backfill to protect the cables. The grading system preferably comprises a number of screens.

The device preferably also includes a plenum chamber surrounding each jet nozzle so that abrasive material (eg pea shingle or granite chippings) can be fed into the chamber, entrained in each jet, and then projected at the faying face at high velocity such that the faying face is broken up. This arrangement has particular use in excavating or re-excavating a trench in cohesive or hard material. By utilising concentric nozzles the abrasive material can be introduced into the centre of the jet stream, thereby avoiding abrasion of the bore of each nozzle.

This invention has the added advantage that the cable guides within the submersible device do not need to accommodate a cross over or vertical orientation of the two cables with the result that the exit can be smaller in the vertical direction, and the cables can therefore be at the lowest possible position in the trench thereby utilising to the maximum the depth of cut to which the trench was excavated.

CLAIMS

1.      Apparatus for laying two or more cables under water in substantially the same trench as a line laid below the sea bed comprises a submersible trench clearing and cable positioning device characterised in that said device has a separate hollow flexible guide for feeding each cable into the device.

2.      Apparatus as claimed in Claim 1, in which each hollow flexible guide is of limited extent, so as to cover a bend of approximately 135° at the appropriate bending radius for the cable fed through it.

3.      Apparatus as claimed in Claim 1, in which each hollow flexible guide extends up to the cable-laying vessel so that each cable is kept under full control throughout its descent to the sea bed.

4.      Apparatus as claimed in Claim 3, in which a single flexible guide having two or more separate channels is used, each channel constituting the separate hollow flexible guide.

5.      Apparatus as claimed in any one of the preceding Claims, in which the device also comprises cutting and lifting means for assisting in the breaking up and/or removal of heavy debris from the trench.

6.      Apparatus as claimed in Claim 5, in which the cutting and lifting means comprises a chain-type cutter and mechanical hoist assembly.

7.      Apparatus as claimed in Claim 5 or Claim 6, in which the device includes high velocity water jets to reform the trench, the jets being positioned between the cutting means.

8.      Apparatus as claimed in any one of the preceding Claims, in which the device also comprises high pressure water jets to cut the outline of the side and base of the trench, and low pressure jets to lift the body of cut material out of the trench.

9.      Apparatus as claimed in Claim 7 or Claim 8, in which the device has a plenum chamber surrounding each jet nozzle so that abrasive material can be fed into the chamber, entrained in each jet, and then projected at the faying face at high velocity.

10.      Apparatus as claimed in any one of the preceding Claims, in which the device also comprises trench filling means comprising a suction system for collecting a proportion of material removed from the trench, a grading system to grade the collected material into various sizes, and a discharge system for initially covering the cables in the trench with material of suitable size to provide backfill to protect the cables.

# EUROPEAN SEARCH REPORT

0072172

## DOCUMENTS CONSIDERED TO BE RELEVANT

| Category | Citation of document with indication, where appropriate, of relevant passages | Relevant to claim | CLASSIFICATION OF THE APPLICATION (Int. Cl. ³) |
|---|---|---|---|
| Y | GB-A-1 049 745 (HARMSTORF) *Page 5, line 121 - page 6, line 65* | 1,4 | E 02 F 5/10 H 02 G 1/10 |
| Y | US-A-3 931 717 (SCHUCK) *Abstract; figures* | 1,2 | |
| Y | GB-A-1 562 744 (ERICSSON) *Page 1, lines 62-76* | 1,3 | |
| A | GB-A-1 235 790 (INDUSTRIELLE HANDELSCOMBINATIE) *The whole document* | 5-8,10 | |
| A | US-A-4 114 390 (STEVENINCK) *The whole document* | 5,7,8 | TECHNICAL FIELDS SEARCHED (Int. Cl. ³) |
| A | GB-A-2 015 618 (GIBSON) *The whole document* | 5,7,8 | E 02 F H 02 G |
| A | GB-A-2 013 823 (LICHTENBERG) *The whole document* | 5,7,8 | |
| A | GB-A-1 312 515 (HARMSTORF) *The whole document* | 5,7,8 | |

The present search report has been drawn up for all claims

| Place of search | Date of completion of the search | Examiner |
|---|---|---|
| THE HAGUE | 02-11-1982 | PAUCNIK B. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO Form 1503 03 82